# FASCICULE DE BREVET EUROPEEN

(11) **EP 0 749 822 B1**
(45) Date de publication et mention de la délivrance du brevet: **11.10.2000**
(21) Numéro de dépôt: 96201544.2
(22) Date de dépôt: 03.06.1996
(51) Int. Cl.: B29C 47/04, A23P 1/12

(54) **Filière d'extrusion à deux composants**
Extrusionsdüse aus zwei Komponenten
Two-component extrusion die

(30) Priorité: 22.06.1995 EP 95201685
(43) Date de publication de la demande: 27.12.1996
(73) Titulaire: SOCIETE DES PRODUITS NESTLE S.A., 1800 Vevey (CH)
(72) Inventeur: Dambrine, Marc, 80470 Ailly-s/Somme (FR); Geromini, Osvaldo, 1358 Valeyres/Rances (CH); Janot, Denis, 80800 Fouilloy (FR)
(74) Mandataire: Thomas, Alain

(56) Documents cités:
- EP-A- 0 169 126
- DE-A- 3 716 362
- FR-A- 2 572 899
- US-A- 2 174 779
- PATENT ABSTRACTS OF JAPAN vol. 10, no. 51 (M-457) [2108] , 28 Février 1986 & JP-A-60 201923 (IKEGAI TEKKO K.K.), 12 Octobre 1985,

## Description

L'invention concerne une filière d'extrusion à deux composants, disposée à la sortie d'un système de cuisson extrusion ou d'extrusion et permettant de fabriquer des boudins ou des croquettes comportant des bandes longitudinales colorées de deux couleurs différentes.

Le brevet EP 0 169 126 concerne déjà une installation de fabrication d'un produit alimentaire composite par extrusion. Cependant, ce type d'installation permet bien de fabriquer un produit bi-composant, mais celui-ci a soit un fourrage absolument invisible de l'extérieur et une enveloppe externe, qui est seule visible, soit les deux composants sont côte à côte.

Le brevet FR 25 72 899 concerne des produits fourrés fabriqués par extrusion avec une filière comportant un tube interne et un tube externe coaxiaux permettant de séparer deux flux. Ces tubes de géométrie simple ne permettent pas d'obtenir des produits dont le fourrage est visuellement perceptible en surface de l'extrudat. De plus, la mise en contact des deux flux n'intervient qu'à une faible distance de la sortie, ce qui limite les possibilités de recollement.

Le brevet US 4,786,243 concerne un produit comportant des bandes longitudinales, mais la solution technique met en oeuvre impérativement deux extrudeurs dont les flux se réunissent dans des tubes coaxiaux munis d'un déflecteur central. Cette technologie, et en particulier ce déflecteur peut engendrer des problèmes de flux et de recollement des deux boudins en sortie de machine.

Le but de la présente invention est de réaliser une filière d'extrusion permettant de fabriquer un produit bi-composant dans lequel le consommateur peut voir directement qu'il s'agit d'un produit composite, ledit produit présentant en coupe, sur l'un des composants, la forme d'étoile. D'autre part, la filière selon l'invention permet un recollement intime entre les deux flux.

L'invention concerne une filière d'extrusion à deux composants, disposée en aval d'un système de cuisson-extrusion ou d'extrusion du type bi-vis à compartiments séparés ou du type monovis avec séparation en deux des flux, comprenant à la sortie du canal d'arrivée d'un des composants:
a) un tube d'amenée du composant central, ledit tube présentant d'amont en aval une première zone ayant une section en forme d'étoile, une seconde zone avec au moins deux ouvertures longitudinales pour permettre l'arrivée du second composant, lesdites ouvertures débouchant entre les branches de l'étoile et une troisième zone permettant le collage des deux composants.
b) un répartiteur entourant la première zone du tube pour créer une chambre et permettre l'arrivée du second composant par les ouvertures longitudinales du tube d'amenée et
c) une buse prolongeant le répartiteur, diminuant le volume de la chambre d'arrivée du second composant et entourant la troisième zone du tube d'amenée.

De manière générale, on travaille avec un bi-vis dans lequel on fait arriver le produit A dans le fourreau comportant la première vis entraînée à rotation pour permettre l'avancée du dit produit A et le produit B est introduit dans le second fourreau pourvu de la seconde vis également entraînée à rotation; les deux compartiments sont séparés et on dispose à la sortie de l'extrudeur la filière d'extrusion selon l'invention. On peut aussi disposer deux filières à la sortie de l'extrudeur.

On peut également travailler avec un bi-vis, dans lequel on a un seul flux de produit; dans ce cas, il faut prévoir à la sortie de l'extrudeur un système de séparation du flux pour pouvoir ensuite colorer différemment les deux flux. La filière selon l'invention est positionnée ensuite directement en aval. Si on travaille avec un monovis, il faut également disposer avant la ou les filières selon l'invention un système de séparation des flux. On utilise avantageusement le système faisant l'objet du brevet européen No. 95100350.8 du 12 janvier 1995, déposé par la demanderesse.

On peut préparer avec la filière selon l'invention tout type de produit provenant d'un système de cuisson extrusion, à savoir un produit pour l'alimentation humaine, comme des céréales pour petit déjeuner (température comprise entre 120 et 200°C), et des produits pour l'alimentation animale, comme des produits secs (température comprise entre 100 et 130°C), c'est-à-dire ayant une teneur en humidité de moins de 15%. On peut aussi travailler sur un système d'extrusion, par exemple pour la fabrication de pâtes alimentaires (température de l'ordre de 70°C). On peut finalement aussi envisager la filière selon l'invention pour la fabrication de produits congelés, comme des crèmes glacées. Dans ce cas, il faut prévoir sur le fourreau du bi-vis ou du monovis et sur la filière des moyens de refroidissement, par exemple un manchon où circulent des fluides de refroidissement, de manière à arriver à une température égale ou inférieure à -8°C.

L'intérêt de cette filière est qu'elle ne nécessite qu'un seul extrudeur ou une seule machine permettant de pousser la pâte à travers la filière.

La pâte de départ peut être colorée ou non. Si on travaille avec des flux séparés et déjà colorés, il ne reste plus qu'à diriger lesdits flux sur la filière selon l'invention. Si on travaille avec un seul flux de pâte non colorée, il faut d'abord séparer les flux et les colorer par l'injection à ce niveau des colorants souhaités. Il est également possible à ce niveau d'ajuster les viscosités de chaque flux par addition d'eau. Les flux peuvent recevoir en outre à ce niveau l'adjonction de différents éléments nutritionnels, de texture et autres.

On comprend bien que dans la filière selon l'invention, le tube d'amenée joue un rôle essentiel; en effet, dans la première zone, il faut que le composant A soit formé en un boudin de section en étoile, de manière à préparer l'arrivée dans la seconde zone du composant B; comme cette seconde zone a une section circulaire, elle permet audit second composant de remplir l'espace entre les branches de l'étoile. La troisième zone du tube permet ensuite de coller les composants A et B de manière progressive et prolongée.

La première zone du tube d'amenée peut présenter une section en forme d'étoile avec entre 3 et 6 branches; dans ce cas, il est bien entendu qu'il faut prévoir dans la seconde zone le nombre correspondant d'ouvertures longitudinales, à savoir entre 3 et 6 ouvertures, lesdites ouvertures débouchant entre les branches de l'étoile. Dans cette seconde zone, le rapport d'ouverture sur surface totale représente 1/4 à 1/2. La troisième zone du tube d'amenée a normalement une section circulaire, comme la seconde zone, mais peut aussi avoir une forme carrée, ovale ou triangulaire.

Le fonctionnement de la filière selon l'invention sera décrite de manière plus exhaustive en relation avec les figures. A la sortie de la filière, il est prévu un système de couteaux rotatifs qui coupent le boudin sortant à la longueur souhaitée, soit sous forme de boudins de longueur comprise entre 5 et 50 mm, soit sous forme de croquettes de dimension plus réduite.

Dans le tube d'amenée, on peut travailler avec des rapports différents s'agissant des longueurs entre la première, la seconde et la troisième zone; ces rapports sont normalement compris entre 3:1:1 et 1:1:1. On préfère travailler avec un rapport de 2/1/1.

Le répartiteur et la buse forment pour des raisons de facilité de nettoyage deux pièces distinctes. On peut aussi envisager qu'ils ne forment qu'une seule pièce.

L'invention concerne également le dispositif de type bi-vis ou monovis comprenant au moins une filière telle que décrite précédemment. De préférence, on utilise un extrudeur avec deux filières d'extrusion.

La suite de la description est faite en relation avec les dessins, sur lesquels:
Fig. 1 est une représentation schématique en coupe partielle d'un système bi-vis,
Fig. 2 est une coupe longitudinale de la filière selon l'invention,
Fig. 3 est une représentation en perspective de la filière selon l'invention et
Fig. 4 est une représentation en perspective du produit obtenu avec la filière selon l'invention.

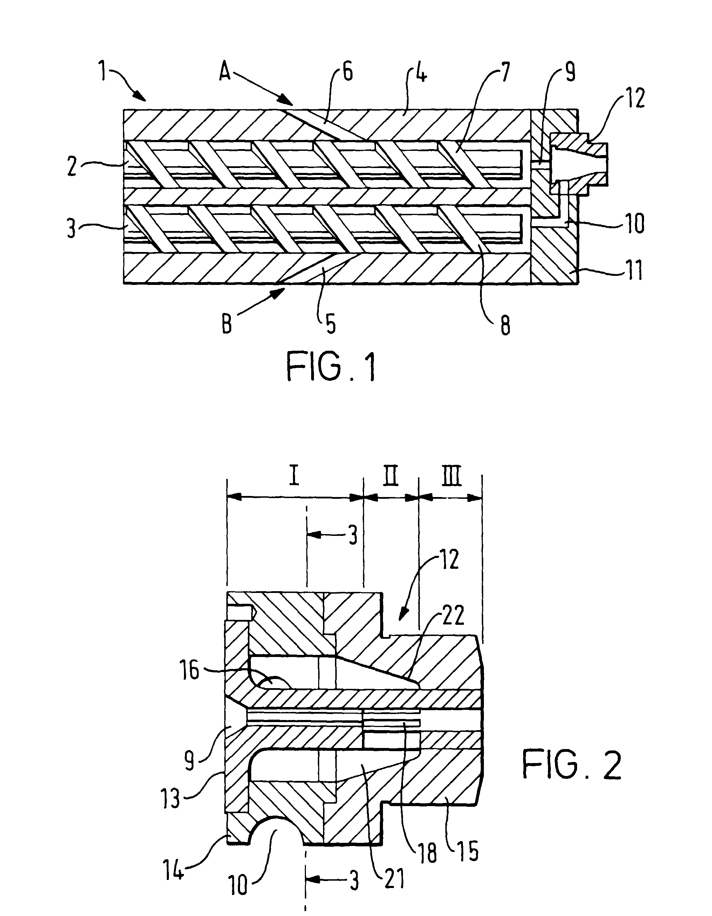

La figure 1 représente une machine d'extrusion classique (1) à deux vis (2,3). Elle comprend un fourreau (4), dans lequel sont placées les deux vis précitées entraînées en rotation par un groupe motoréducteur (non représenté). Sur chaque vis est enroulé en hélice un filet (7), respectivement (8), de pas déterminé. Sur le fourreau (4), il est prévu des alésages (5,6) permettant l'arrivée des composants A et B; ces composants sont entraînés par la rotation des vis (2,3) vers les canaux de sortie (9,10) disposés dans une plaque (11) de séparation des flux. Les deux flux sont ensuite réunis pour converger vers la filière (12) selon l'invention.

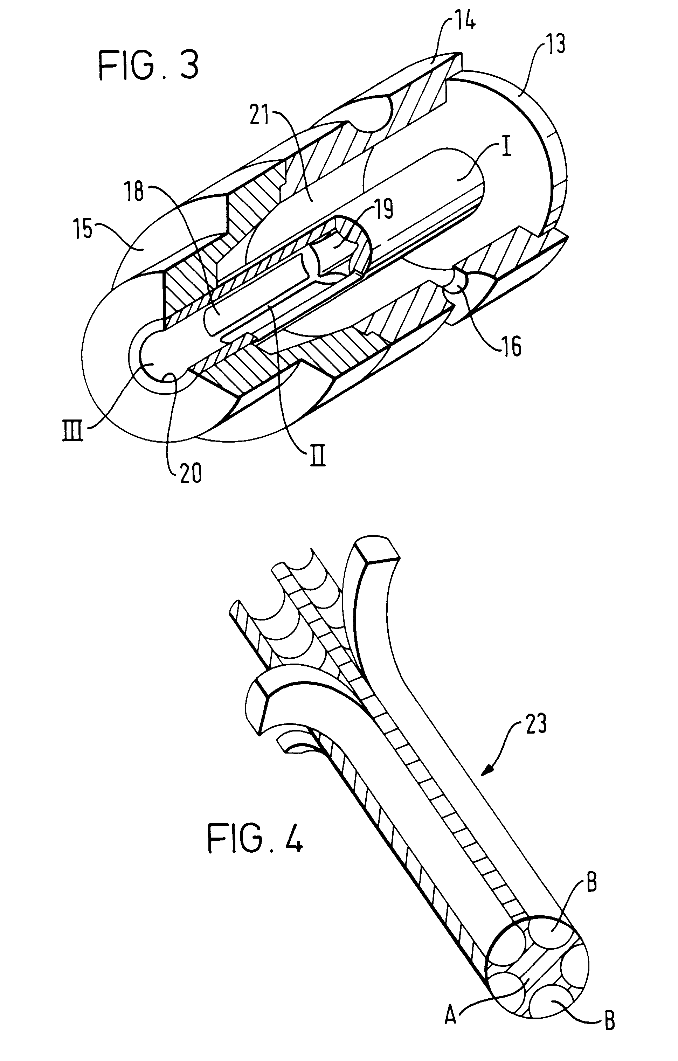

En référence aux figures 2 et 3, la filière (12) comprend un tube (13) d'amenée du composant central A, un répartiteur (14) et une buse (15) prolongeant le répartiteur.

Le tube (13) présente donc la zone I de section en forme d'étoile, la zone II avec des ouvertures longitudinales (18) et une zone III. Dans la zone I, le tube présente un alésage (19) en forme d'étoile à 5 branches, par contre dans les zones II et III, le tube a une section circulaire et présente un alésage (20). La chambre (21) est créée par l'espace entre le tube (13) et le répartiteur (14) et la buse (15).

La filière fonctionne de la manière suivante: le flux du composant A arrivant par le canal (9) entre dans le tube (13) et est conformé selon l'alésage (19) sous forme d'étoile à 5 branches. Le composant B arrivant par le canal (10) pénètre dans la chambre (21) par l'ouverture (16) pratiquée dans le répartiteur (14).

Le flux A occupe donc le centre du tube (13) ainsi que les branches de l'étoile. Au niveau de la chambre (21), le flux B est mis en contact avec le flux A. Le flux B est introduit dans la buse par le répartiteur (14). Grâce aux ouvertures longitudinales (18), de longueur calculée dans la paroi du tube (13), le flux B pénètre à l'intérieur du tube. Il est forcé par la partie conique (22) de la buse (15) de venir occuper l'espace libre entre les branches de l'étoile occupé par le flux A à l'intérieur du tube (13). Les deux flux sont alors en contact et comme ils sont bloqués à l'intérieur du tube, ils se collent sur une longueur bien définie (zone III).

Le boudin d'extrusion sort alors du tube (13) pour être coupé à une longueur désirée. La Figure 4 montre le boudin (23) constitué par les composants A et B. La filière selon l'invention permet d'obtenir un produit composite duquel il est possible de voir directement les deux constituants, ce qui présente pour le consommateur un attrait certain.

## Revendications

1. Filière d'extrusion (12) à deux composants (A,B), disposée en aval d'un système de cuisson extrusion ou d'extrusion du type bi-vis (2, 3) compartiments séparés ou du type monovis avec séparation en deux du flux, caractérisée en ce qu'elle comprend à la sortie du canal d'arrivée (9) d'un des composants:
a) un tube d'amenée (13) du composant central (A), ledit tube présentant d'amont en aval une première zone (I) ayant une section en forme d'étoile, une seconde zone (II) avec au moins deux ouvertures longitudinales (18) pour permettre l'arrivée du second composant (B), lesdites ouvertures (18) débouchant entre les branches de l'étoile et une troisième zone (III) permettant le collage des deux composants (A,B),
b) un répartiteur (14) entourant la première zone du tubes (I) pour créer une chambre (21) et permettre l'arrivée du second composant (B) par les ouvertures longitudinales (18) du tube d'amenée et
c) une buse (15) prolongeant le répartiteur (14), diminuant le volume de la chambre d'arrivée du second composant (B) et entourant la troisième zone (III) du tube d'amenée.

2. Filière d'extrusion selon la revendication 1, caractérisée en ce que la première zone (I) du tube d'amenée (13) a une section en forme d'étoile présentant entre 3 et 6 branches et la seconde zone (II) a le nombre correspondant d'ouvertures longitudinales (18).

3. Filière d'extrusion selon l'une des revendications 1 ou 2, caractérisé en ce que le rapport des longueurs pour le tube d'amenée (13) entre les premières (I), seconde (II) et troisième (III) zone est compris entre 3:1:1 et 1:1:1.

4. Filière d'extrusion (12) selon l'une des revendications 1 à 3, caractérisé en ce que dans la seconde zone (II) du tube d'amenée du composant central (A), le rapport ouverture sur surface totale représente 1/4 à 1/2.

5. Dispositif du type bi-vis ou monovis pour la cuisson extrusion ou l'extrusion, caractérisé en ce qu'il comprend au moins une filière (12) selon l'une des revendications 1 à 3.

## Patentansprüche

1. Extrusionsdüse (12) für zwei Komponenten (A, B), die hinter einem Kochextrusions- oder Extrusionssystem vom Zweischneckentyp (2, 3) mit getrennten Kammern oder vom Einschneckentyp mit Zweiteilung des Stroms angeordnet ist, dadurch gekennzeichnet, daß sie am Austritt des Eintrittskanals (9) für eine der Komponenten folgendes aufweist:
a) ein Rohr (13) zur Zufuhr der zentralen Komponente (A), das in Strömungsrichtung von vorne nach hinten einen ersten Bereich (I) mit einem Querschnitt in Form eines Sterns, einen zweiten Bereich (II) mit mindestens zwei zwischen den Schenkeln des Sterns ausmündenden Längsöffnungen (18) für den Zutritt der zweiten Komponente (B) und einen dritten Bereich (III) aufweist, der die Verklebung der beiden Komponenten (A, B) gestattet,
b) einen den ersten Bereich (I) des Rohrs umgebenden Verteiler (14), der eine Kammer (21) bildet und den Zutritt der zweiten Komponente (B) über die Längsöffnungen (18) des Zufuhrrohrs gestattet, und
c) ein den Verteiler (14) verlängerndes Mundstück (15), das das Volumen der Kammer für den Zutritt der zweiten Komponente (B) reduziert und den dritten Bereich (III) des Zufuhrrohrs umgibt.

2. Extrusionsdüse nach Anspruch 1, dadurch gekennzeichnet, daß der erste Bereich (I) des Zufuhrrohrs (13) einen Querschnitt in Form eines Sterns mit 3 bis 6 Schenkeln und der zweite Bereich (II) die entsprechende Anzahl von Längsöffnungen (18) aufweist.

3. Extrusionsdüse nach einem der Ansprüche 1 oder 2, dadurch gekennzeichnet, daß das Verhältnis zwischen den Längen für das Zufuhrrohr (13) im ersten (I), zweiten (II) und dritten Bereich (III) zwischen 3:1:1 und 1:1:1 beträgt.

4. Extrusionsdüse (12) nach einem der Ansprüche 1 bis 3, dadurch gekennzeichnet, daß im zweiten Bereich (II) des Rohrs zur Zufuhr der zentralen Komponente (A) das Verhältnis von Öffnung zu Gesamtfläche 1/4 bis 1/2 beträgt.

5. Zweischnecken- oder Einschneckenvorrichtung zum Kochextrudieren oder Extrudieren, dadurch gekennzeichnet, daß sie mindestens eine Düse (12) nach einem der Ansprüche 1 bis 3 aufweist.

## Claims

1. Extrusion die (12) for two components (A, B) disposed downstream from an extrusion-cooking system or an extrusion system of the twin screw type (2, 3) with separate compartments or of the single screw type with separation of the flow into two, characterized in that it comprises at the outlet of the inflow channel (9) for one of the components:
a) a feed tube (13) for the central component (A), the said tube having, from upstream to downstream, a first zone (I) having a star-shaped cross section, a second zone (II) with at least two longitudinal openings (18) to enable a second component (B) to flow in, the said openings (18) emerging in the arms of the star, and a third zone (III) enabling the two components (A, B) to be bonded together,
b) a distributer (14) surrounding the first zone of the tube (I) so as to create a chamber (21) and to enable a second component (B) to flow in through the longitudinal openings (18) of the feed tube and
c) a nozzle (15) extending the distributer (14), reducing the volume of the inflow chamber of the second component (B) and surrounding the third zone (III) of the feed tube.

2. Extrusion die according to claim 1, characterized in that the first zone (I) of the feed tube (13) has a star-shaped cross section having between 3 and 6 arms and the second zone (II) has a corresponding number of longitudinal openings (18).

3. Extrusion die according to either of claims 1 or 2, characterized in that the ratio of the lengths for the feed tube (13) between the first (I), second (II) and third (III) zones lies between 3:1:1 and 1:1:1.

4. Extrusion die (12) according to one of claims 1 to 3, characterized in that in the second zone (II) of the feed tube of the central component (A), the ratio of the opening to the total area represents ¼ to ½.

5. Device of the twin-screw or single-screw type for extrusion-cooking or extrusion, characterized in that it includes at least one die (12) according to one of claims 1 to 3.
